**Europäisches Patentamt**

(19) **European Patent Office**

**Office européen des brevets**

(11) Veröffentlichungsnummer: **0 169 404**

**A2**

(12) # EUROPÄISCHE PATENTANMELDUNG

(21) Anmeldenummer: **85107988.9**

(22) Anmeldetag: **27.06.85**

(51) Int. Cl.⁴: **H 02 M 7/162**

(30) Priorität: **27.07.84 DE 3427825**

(43) Veröffentlichungstag der Anmeldung:
**29.01.86 Patentblatt 86/5**

(84) Benannte Vertragsstaaten:
**AT CH DE FR GB LI NL**

(71) Anmelder: **MITEC Moderne Industrietechnik GmbH
Daimlerstrasse 15
D-8012 Ottobrunn(DE)**

(72) Erfinder: **Mehnert, Walter, Dr. Dipl.-Ing.
Grillparzerstrasse 6
D-8012 Ottobrunn(DE)**

(72) Erfinder: **Barbacsy, Ludwig, Dipl.-Ing.
Ottweilerstrasse 6
D-8000 München 83(DE)**

(74) Vertreter: **Strasser, Wolfgang, Dipl.-Phys et al,
Patentanwälte Strohschänk, Uri & Strasser Innere
Wiener Strasse 8
D-8000 München 80(DE)**

(54) **Gleichrichter.**

(57) Um Gleichspannungen mit größerer Flexibilität zu erzeugen, umfaßt ein erfindungsgemäßer Gleichrichter (1) einen Wechselspannungs-Meßfühler (25), einen Komparator (22), steuerbare Schalter (160 bis 183) und eine Schaltersteuerung (20), durch die die Schaltzustände der Schalter in Abhängigkeit vom Ausgangssignal des des Komparators änderbar sind, um wenigstens einen der Gleichspannungs-Ausgänge (11,12,13) während jeder Wechselspannungsphase nacheinander so mit den Wechselspannungs-Eingängen des Gleichrichters für bestimmte Zeitspannen zu verbinden, daß an ihm gegenüber einem festen oder variablen Gleichspannungspotential eine pulsierende Gleichspannung abfällt. Die Schaltzeitpunkte werden durch ständige Messung der Wechselspannungs-Momentanwerte und deren Vergleich mit vorgebbaren Gleichspannungspegeln oder Wechselspannungen bestimmt, die als Referenzwerte dienen. Durch Messung und Überwachung einer Ausgangs-Gleichspannung und Änderung der Schaltzeitpunkte beim Auftreten von Abweichungen dieser Gleichspannung von einem vorgebbaren Sollwert kann der Gleichrichter zusätzlich die Funktion eines Gleichspannungsreglers übernehmen.

EP 0 169 404 A2

./...

FIG.1

Gleichrichter

Die Erfindung betrifft einen Gleichrichter zur Erzeugung
wenigstens einer Gleichspannung aus einer Wechselspannung,
insbesondere aus den Wechselspannungen eines Mehrphasensystems.


Bei bekannten Gleichrichtern dieser Art werden üblicherweise Dioden verwendet, die in Brückenschaltung angeordnet
sind und die beiden Gleichspannungsausgänge mit den
Wechselspannungseingängen verbinden. Diese Diodenschaltungen sind selbststeuernd, d.h. sie geben einen wesentlichen Stromfluß immer dann frei, wenn an ihnen in Durchlaßrichtung eine Potentialdifferenz anliegt, die
                die Durchlaßspannung der Diode übersteigt,
und sperren das Fließen eines Stroms, wenn die an ihnen
anliegende Spannung unter die Durchlaßspannung absinkt
bzw. negative Werte annimmt. Mit derartigen Gleichrichtern ist aus einer Wechselspannung mit gegebener Maximal-
Amplitude immer nur eine einzige Gleichspannung
erzeugbar, deren Mittelwert in Abhängigkeit von der verwendeten Diodenschaltung und der Größe der zwischen den
Gleichspannungsausgängen des Gleichrichters liegenden
Glättungskondensatoren zwar unterschiedlich sein kann, bei
einer einmal gewählten Schaltungsanordnung aber unveränderlich festliegt.
Demgegenüber liegt der Erfindung die Aufgabe zugrunde,
einen Gleichrichter zu schaffen, der es ermöglicht, ohne
nennenswerte Verluste mehrere Gleichspannungen aus ein
und derselben Wechselspannung zu erzeugen, wobei diese
verschiedenen Gleichspannungen entweder auf mehreren
Ausgängen gleichzeitig oder auf denselben Ausgängen
zeitlich nacheinander zur Verfügung gestellt werden
können.


Zur Lösung dieser Aufgabe sieht die Erfindung die im
Anspruch 1 zusammengefaßten Merkmale vor.

Bei einem erfindungsgemäßen Gleichrichter wird somit
zur Erzeugung einer oder mehrerer Gleichspannungen jeder
der betroffenen Gleichspannungs-Ausgänge mit Hilfe von
frei steuerbaren Schaltern, die vorzugsweise keine Ventileigenschaften besitzen, während einer jeden Phase der
Wechselspannung oder Wechselspannungen für bestimmte
Zeitspannen in der Weise abwechselnd mit den verschiedenen Wechselspannungseingängen verbunden, daß an ihm,
bezogen auf einen anderen Gleichspannungs-Ausgang, der
entweder mit einem festen Potential, beispielsweise Masse,
verbunden, oder ebenfalls durch wechselnde Schaltverbindungen auf einem vorgebbaren mittleren Potential gehalten
werden kann, eine gewünschte, im allgemeinen pulsierende
Gleichspannung abfällt. Dabei werden die Umschaltzeitpunkte, d.h. die Zeitpunkte, zu denen ein Gleichspannungs-
Ausgang von dem Wechselspannungseingang, mit dem er bis
dahin verbunden war, getrennt und vorzugsweise statt
dessen mit einem anderen Wechselspannungseingang verbunden
wird, dadurch bestimmt, daß die Amplituden-Momentanwerte
der den Wechselspannungseingängen zugeführten Spannungen
ständig gemessen und mit vorgebbaren Referenzspannungswerten verglichen werden. Bei letzteren kann es sich um
einen oder mehrere feste Gleichspannungspegel oder um
eine oder mehrere Wechselspannungen handeln, die einen
anderen zeitlichen Verlauf besitzen, als die Wechselspannung, mit der sie verglichen werden. Immer wenn die
Komparatoranordnung feststellt, daß eine gemessene Wechselspannung einen relevanten Referenzwert über- oder unterschreitet, gibt sie ein entsprechendes Signal an die
Schaltersteuerung ab, die daraufhin den Schaltzustand
eines oder mehrerer Schalter ändert, d.h. einen oder
mehrere bisher geschlossene Schalter öffnet und/oder
einen oder mehrere bisher geöffnete Schalter schließt.
Gleichzeitig kann der Schaltzustand anderer Schalter
unverändert bleiben, die dann bei anderen Referenzwert-
Über- oder Unterschreitungen betätigt werden. Welche Referenzwerte verwendet und bei welchen Referenzwert-
Überschreitungen bzw. -Unterschreitungen welche Schalter
betätigt werden, hängt davon ab, welche Art von Wechselspannungssystem zur Verfügung steht und welche Gleichspannung bzw. Gleichspannungen daraus erzeugt werden
sollen. Hierzu wird der Schaltersteuerung ein bestimmtes
Programm vorgegeben, aus dem sich eindeutige Schaltkriterien ergeben, die festlegen, welche Schalter wann, d.
h. bei welchen Phasenwinkeln der jeweiligen Wechselspannungsphase oder -phasen geöffnet und/oder geschlossen werden müssen.
Man erhält durch die hierdurch gegebene freie Wählbarkeit
der Schaltzeitpunkte einen außerordentlich flexiblen
Gleichrichter, der einerseits bei gleichbleibendem Funktionsprinzip auf einfache Weise sowohl bei einphasigen als
auch beliebigen mehrphasigen Wechselspannungssystemen
Verwendung finden kann, um die verschiedensten Gleichspannungen zu erzeugen, und der es andererseits auch
bei einmal festgelegter Schalterkonfiguration erlaubt,
durch Änderung der Referenzspannungswerte und/oder der
Schaltzeitpunkte aus ein und demselben Wechselspannungssystem nacheinander ganz verschiedene mittlere Gleichspannungswerte abzuleiten.

Ein besonderer Vorteil des erfindungsgemäßen Gleichrichters ist weiterhin darin zu sehen, daß er die Verwendung
von Schaltern, beispielsweise schnellen Halbleiterschaltern
(Power-MOS-Schaltern) erlaubt, die im geschlossenen Zustand
einen äußerst geringen Durchgangswiderstand aufweisen, so
daß eine maximale Nutzung der zur Verfügung stehenden
Wechselspannungsamplituden möglich wird.

Das hohe Maß an Variabilität und die optimale Ausnutzung
der jeweiligen Wechselspannungen durch einen erfindungsgemäßen Gleichrichter kommen besonders gut dann zur Geltung, wenn er in Verbindung mit einem Mehrphasensystem, insbesondere mit einem 3-phasigen Drehstromsystem eingesetzt wird, dessen Phasen jeweils um 120$^{\circ}$ gegeneinander
verschoben sind. Dabei können zum Beispiel nur zwei Gleichspannungsausgänge vorgesehen sein, von denen der eine fest
mit dem Null- oder Mittelpunktsleiter des Mehrphasensystems
verbunden ist, während der andere über entsprechende
Schalter nacheinander mit jeweils einem von mehreren bzw.
allen Phasenleitern und gewünschtenfalls auch noch mit
dem Null-Leiter verbindbar ist.

Besonders vorteilhaft ist es, wenn in einem solchen Fall
der schaltbare Gleichspannungsausgang abwechselnd immer
so mit den verschiedenen Leitern des Mehrphasensystems
verbunden wird, daß beim Umschalten von einem Leiter auf
einen anderen keine Spannungssprünge auftreten. Um dies
zu erreichen, werden als Referenzspannungen, mit denen
der Komparator die auf den einzelnen Leitern vorhandenen
Amplituden-Momentanwerte vergleicht, eben diese Amplituden-
Momentanwerte in der Weise verwendet, daß beispielsweise
für die Spannung auf dem R-Leiter die Spannungen auf den
S- und T-Leitern und/oder dem Null-Leiter, für die
Spannung auf dem S-Leiter die Spannungen auf dem R-, T-
und N-Leiter  und für die Spannung auf dem T-Leiter die
Spannungen auf dem R-, S- und N-Leiter  als Referenzspannungen dienen. Dabei hat der N-Leiter permanent denselben Amplituden-Momentanwert $U_N = 0$. Als Umschaltzeitpunkte kommen bei dieser Betriebsart eines erfindungsgemäßen Gleichrichters für einen Gleichspannungsausgang
immer nur die Momente in Frage, in denen die momentane
Spannung auf dem Leiter, mit dem der Gleichspannungsausgang bis zum Umschalten verbunden war, nach Betrag und
Vorzeichen gleich der Spannung auf einem anderen der Leiter
des Mehrphasensystems ist; mit eben diesem anderen Leiter
wird dann der betreffende Gleichspannungsausgang gleichzeitig mit dem Abtrennen vom bisherigen Leiter verbunden.

Je nachdem, von welchem Mehrphasensystem ein erfindungsgemäßer Gleichrichter gespeist wird, treten je Wechselspannungsperiode auf einem Phasenleiter mehrere für ein
Umschalten auf einen anderen Leiter geeignete Zeitpunkte
auf.

So durchläuft bei einem 3-Phasen-System, bei dem die
einzelnen Wechselspannungen um jeweils $120^O$ gegeneinander
verschoben sind, die Spannung auf einem jeden Phasenleiter
zunächst beim Phasenwinkel $0^O$ das Nullpotential in Richtung
zu positiven Spannungswerten. Dieser "Schnittpunkt" ist
geeignet, um einen Gleichspannungsausgang, der bisher
mit dem Null-Leiter verbunden war, von diesem abzutrennen
und mit dem betrachteten Phasenleiter zu verbinden, oder
um einen Gleichspannungsausgang, der bisher mit diesem
Phasenleiter verbunden war, abzukoppeln und mit dem
Null-Leiter zu verbinden. Bei einem Phasenwinkel von
$30^O$ durchläuft die Spannung auf dem betrachteten Phasenleiter den 50%-Wert der positiven Scheitelspannung mit
positiver Steigung, während auf einem der beiden anderen
Phasenleiter die Spannung denselben Wert mit negativer
Steigung durchläuft. Auch bei diesem "Schnittpunkt" kann
ein Gleichspannungsausgang, der bis dahin mit dem einen
der beiden Phasenleiter verbunden war, auf den anderen
Phasenleiter umgeschaltet werden.

Entsprechende "Schnittpunkte" treten weiterhin auf, wenn
die Spannung auf dem betrachteten Phasenleiter die Phasenwinkel $150^O$ (50%-Wert der positiven Scheitelspannung mit
negativer Steigung), $180^O$ (Nulldurchgang mit negativer
Steigung), $210^O$ (50%- Wert der negativen Scheitelspannung
mit negativer Steigung), $330^O$ (50%-Wert der negativen
Scheitelspannung mit positiver Steigung) durchläuft.

Bei einem 6-Phasen-System ergeben sich noch mehr derartige
Schnittpunkte, nämlich zusätzlich zu den eben genannten Schnittpunkten bei den Phasenwinkeln $60^{\circ}$ (86,6%-Wert der positiven Scheitelspannung mit positiver Steigung), $120^{\circ}$ (86,6%-Wert der positiven Scheitelspannung mit negativer Steigung), $240^{\circ}$ (86,6%-Wert der negativen Scheitelspannung mit negativer Steigung) und $300^{\circ}$ (86,6%-Wert der negativen Scheitelspannung mit positiver Steigung).

Gemäß der Erfindung ist es nicht erforderlich, bei jedem dieser Schnittpunkte eine Umschaltung vorzunehmen. Vielmehr werden in Abhängigkeit davon, welche Gleichspannung auf einem Gleichspannungs-Ausgang erzeugt werden soll, ganz bestimmte Schnittpunkte ausgewählt, bei deren Erreichen der betreffende Gleichspannungs-Ausgang vom bisherigen Leiter des Mehrphasen-Systems getrennt und mit einem anderen verbunden wird.

Dadurch, daß eine einmal getroffene Auswahl von solchen Schnittpunkten, bei denen umgeschaltet wird, bei einer gegebenen Schalteranordnung nicht endgültig festgelegt ist sondern gewünschtenfalls geändert oder z.B. im Rahmen eines laufenden Programms auch mehrfach variiert werden kann, ergibt sich eine hohe Flexibilität für einen erfindungsgemäßen Gleichrichter. Dabei müssen im konkreten Fall nicht immer alle vorhandenen Schalter benutzt werden. Vielmehr können zur Erzeugung einer bestimmten Gleichspannung einzelne Schalter permanent geöffnet bleiben, die zur Erzeugung einer anderen Gleichspannung für bestimmte Zeitspannen geschlossen werden müssen.

Soll allerdings mit einem erfindungsgemäßen Gleichrichter dauernd nur eine einzige Gleichspannung erzeugt werden, so werden auch nur die hierfür unbedingt erforderlichen Schalter vorgesehen.

Bei einem besonders bevorzugten Ausführungsbeispiel eines erfindungsgemäßen Gleichrichters ist wenigstens ein Gleichspannungs-Ausgang vorgesehen, der mit den Phasenleitern des Mehrphasen-Systems ständig in der Weise verbunden wird, daß auf ihm immer gerade die Wechselspannung erscheint, die ihr beispielsweise positives Maximum durchläuft. Für ein 3-phasiges System bedeutet dies, daß dieser Gleichspannungsausgang mit jedem der drei Phasenleiter nacheinander verbindbar ist und daß er immer mit demjenigen Phasenleiter verbunden ist, dessen Wechselspannung ihren Phasenwinkelbereich zwischen $30^O$ und $150^O$ durchläuft. Immer dann, wenn die Spannung auf einem Phasenleiter, mit dem der Gleichspannungsausgang gerade verbunden ist, den Phasenwinkel $150^O$ erreicht, bei dem diese Spannung den 50%-Wert der positiven Scheitelspannung mit fallender Steigung durchläuft, durchläuft auf einem der beiden anderen Phasenleiter die Spannung bei ihrem Phasenwinkel von $30^O$ denselben Wert mit positiver Steigung. Mit eben diesem Phasenleiter wird der Gleichspannungsausgang verbunden, während er gleichzeitig vom "alten" Phasenleiter getrennt wird. Erreicht die Spannung auf dem "neuen" Phasenleiter ihren Phasenwinkel von $150^O$, so wird der Gleichspannungs-Ausgang auch von diesem Phasenleiter wieder getrennt und statt dessen mit dem dritten Phasenleiter verbunden, auf dem die Spannung jetzt den Phasenwinkel von $30^O$ erreicht hat. Durchläuft dann die Spannung auf diesem dritten Phasenleiter den Phasenwinkel von $150^O$, hat inzwischen die Spannung auf dem zuerst genannten Phasenleiter wieder ihren $30^O$-Phasenwinkel erreicht, so daß der betrachtete Gleichspannungsausgang jetzt wieder auf den ersten Phasenleiter geschaltet werden kann. Der Gleichspannungs-Ausgang ist also ohne Unterbrechung ständig mit einem der drei Phasenleiter verbunden, und die an ihm gegenüber dem Nullpotential abgreifbare pulsierende Gleichspannung pendelt zwischen dem positiven 50%-Wert und dem positiven 100%-Wert der Scheitelspannung mit der dreifachen Frequenz der Wechselspannung hin und her.

Zusätzlich zu dem eben geschilderten ersten Gleichspannungsausgang kann bei einem erfindungsgemäßen Gleichrichter, der von einem dreiphasigen System gespeist wird, ein
zweiter Gleichspannungs-Ausgang vorgesehen werden, der mit den
drei Phasen-Leitern der Reihe nach ständig so verbunden wird, daß auf
ihm immer gerade die Wechselspannung erscheint, die ihre
negativen Maxima, d.h. den Phasenwinkelbereich von 210°
bis 330° durchläuft. Damit erhält man analog zum ersten
Gleichspannungsausgang auf diesem zweiten Gleichspannungsausgang eine gegenüber dem Nullpotential negative pulsierende Gleichspannung, die mit der dreifachen Frequenz der
Wechselspannung zwischen dem negativen 50%-Wert und dem
negativen 100%-Wert der Scheitelspannung pendelt.

Besonders günstige Eigenschaften weist die zwischen den
beiden eben geschilderten Gleichspannungs-Ausgängen abgreifbare pulsierende Differenz-Gleichspannung auf. Da
die Welligkeiten der beiden pulsierenden Gleichspannungen
eine Phasenverschiebung von 60° (bezogen auf die Frequenz
der Eingangs-Wechselspannung) aufweisen, durchläuft immer
der Absolutbetrag der einen der beiden Gleichspannungen
gerade sein Maximum, wenn der Absolutbetrag der anderen
Gleichspannung sein Minimum durchläuft. Dadurch kompensieren sich die Welligkeiten der beiden Gleichspannungen
teilweise gegenseitig und die Differenzspannung, die
zwischen dem 1,5-fachen und dem 1,732-fachen der Scheitelspannung der Eingangswechselspannung hin- und herpendelt,
hat eine sehr geringe Restwelligkeit.

Bei einem 6-phasigen System können ebenfalls den obigen
ersten und/oder zweiten Gleichspannungs-Ausgängen entsprechende Gleichspannungs-Ausgänge vorgesehen werden,
deren Verbindungen mit dreien der 6 Phasenleiter in genau
derselben Weise umgeschaltet werden. Die dabei entstehenden pulsierenden Gleichspannungen können ebenfalls einzeln
gegenüber dem Nullpotential abgegriffen werden, oder es kann auch hier die Differenzspannung dieser beiden Gleichspannungs-Ausgänge weitere Verwendung finden.

Statt dessen können aber auch ein oder zwei Gleichspannungs-
Ausgänge vorgesehen werden, bei denen die Umschaltung so
erfolgt, daß sie immer mit den Phasenleitern verbunden
sind, auf denen die Spannung gerade den Phasenwinkelbereich
von $60^\circ$ bis $120^\circ$ bzw. von $240^\circ$ bis $300^\circ$ durchläuft. Um
dies zu ermöglichen, muß nacheinander eine Verbindung .
zwischen jedem der betreffenden Gleichspannungs-Ausgänge
und jeweils einem aller sechs Phasenleiter herstellbar sein. Daraus
ergibt sich der Vorteil einer noch geringeren Welligkeit
und eines höheren Mittelwertes der abgreifbaren Gleichspannung bzw. Gleichspannungen.

Erfindungsgemäß können bei einem von einem 6-phasigen
System gespeisten Gleichrichter auch mehr als zwei der
oben geschilderten Gleichspannungs-Ausgänge in beliebigen
Kombinationen und/oder weitere Gleichspannungs-Ausgänge
vorgesehen werden, die zusätzlich noch mit dem Null-Potential
verbindbar sind und so die Erzeugung weiterer Gleichspannungs-Mittelwerte erlauben. Überdies können auch hier an
ein und denselben Gleichspannungs-Ausgängen nacheinander
dadurch verschiedene Gleichspannungen erzeugt werden, daß
andere Umschaltzeitpunkte gewählt werden.

Vorteilhafterweise kann ein erfindungsgemäßer Gleichrichter zusätzlich noch dadurch die Funktion eines
Gleichspannungsreglers übernehmen, daß er weiterhin
einen Meßfühler zum Erfassen einer konstant zu haltenden Gleichspannung zwischen wenigstens zweien seiner
Gleichspannungsausgänge, einen Komparator zum Vergleich
des Gleichspannungsmeßwertes mit einem vorgebbaren Sollwert sowie eine Regeleinheit umfaßt, durch die die Schaltkriterien änderbar sind, aufgrund derer die Schaltersteuerung die Schalter betätigt. Das kann entweder in der
Weise erfolgen, daß dem Wechselspannungskomparator beim
Auftreten von Abweichungen der Gleichspannung vom Sollwert andere Referenzwerte vorgegeben werden, so daß er
seine Ausgangssignale zu anderen Zeitpunkten an die
Schaltersteuerung liefert, die somit die Schalter auch
zu anderen Zeitpunkten als bisher betätigt. Eine andere
Möglichkeit besteht darin, dem Wechselspannungs-Komparator ständig alle möglicherweise in Frage kommenden
Referenzwerte zuzuführen und die Schaltersteuerung aus
der Vielzahl von Ausgangssignalen des Komparators diejenigen auswählen zu lassen, die "günstige" Schaltzeitpunkte definieren, d.h. Schaltzeitpunkte zum Betätigen
bestimmter Schalter in der Weise, daß an den zugehörigen Gleichspannungsausgängen die gewünschte Gleichspannung erscheint. Droht diese Gleichspannung sich zu ändern, so werden andere "günstige" Schaltzeitpunkte automatisch ausgewählt, um zumindest eine teilweise Kompensation dieser Änderung zu erzielen. Die beiden eben genannten Regelverfahren können erfindungsgemäß auch miteinander kombiniert werden.

Die Erfindung wird im folgenden anhand von Ausführungsbeispielen unter Bezugnahme auf die Zeichnung beschrieben;
in dieser zeigt:

Fig. 1          einen von einem 3-phasigen Wechselspannungs-
                system gespeisten erfindungsgemäßen Gleich-
                richter mit mehreren Gleichspannungs-Aus-
                gängen,

Fig. 2a bis 2c     den Spannungsverlauf auf den drei Phasen-
Leitern aus Fig. 1 sowie die durch die
Wahl bestimmter Umschaltzeitpunkte
an einigen der Gleichspannungs-Ausgänge
des Gleichrichters aus Fig. 1 erzeugbaren
unterschiedlichen pulsierenden Gleichspannungen,

Fig. 3a bis 3c     erneut den Spannungsverlauf auf den drei
Phasen-Leitern aus Fig. 1 sowie die
durch die Wahl anderer Umschaltzeitpunkte
an einem weiteren Gleichspannungs-Ausgang
erzeugbaren pulsierenden Gleichspannungen,

Fig. 4     den Spannungsverlauf auf den Phasen-Leitern
eines 6-phasigen Wechselspannungs-Systems
mit möglichen weiteren Umschaltzeitpunkten.und

Fig. 5     einen zu einem Gleichspannungsregler
erweiterten erfindungsgemäßen Gleichrichter.

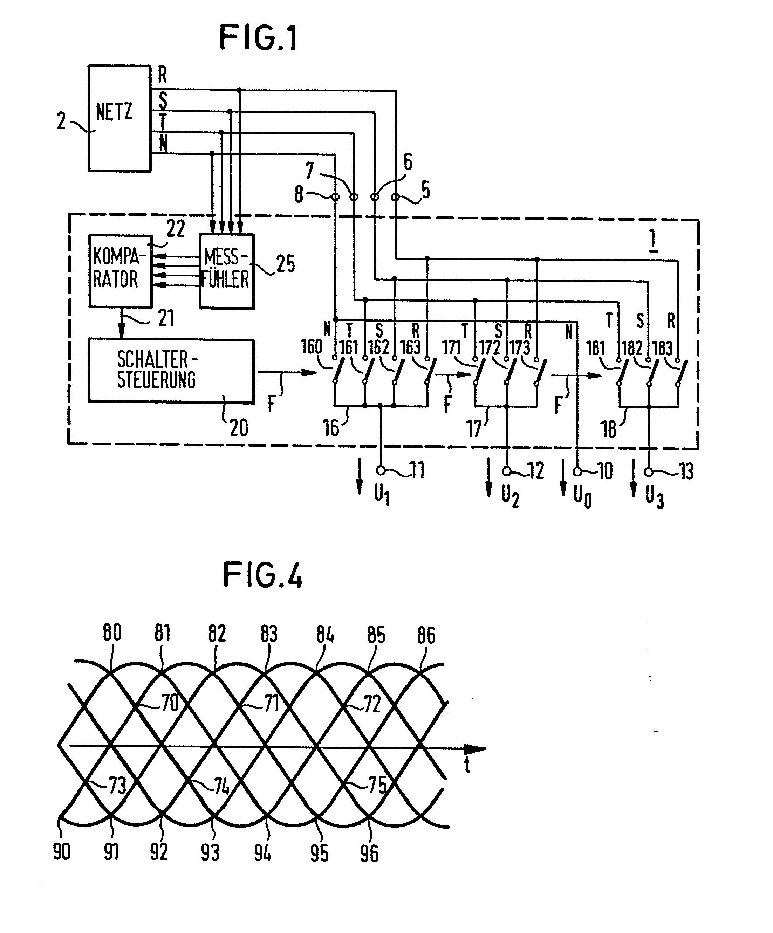

In Fig. 1 ist ein erfindungsgemäßer Gleichrichter 1 dargestellt, mit dessen Hilfe eine Reihe von pulsierenden
Gleichspannungen $U_1$, $U_2$ und $U_3$ aus den Wechselspannungen
eines 3-Phasen-Drehstromsystems erzeugt werden kann, die
den Wechselspannungs-Eingängen 5, 6, 7 des Gleichrichters
1 über die drei Phasen-Leiter R, S, T von einem Drehstromgenerator oder einem Netz 2 zugeführt werden können. Ein
weiterer Eingang 8 des Gleichrichters 1 ist mit dem Null-
Leiter N des Mehrphasensystems verbunden.

Der Gleichrichter 1 besitzt drei Gleichspannungs-Ausgänge
11, 12, 13, an denen die oben genannten pulsierenden
Gleichspannungen $U_1$ bis $U_3$ abgreifbar sind. An einem
weiteren Ausgang 10 steht das Potential $U_O$ des Null-Leiters
N zur Verfügung.

Jeder der Gleichspannungs-Ausgänge 11, 12 und 13 ist
mit einer zugehörigen Schaltergruppe 16, 17 bzw. 18
verbunden, wobei die Schaltergruppe 16 vier Schalter
160, 161, 162 und 163, die Schaltergruppe 17 drei
Schalter 171, 172, 173 und die Schaltergruppe 18 drei
Schalter 181, 182, 183 umfaßt.

Mit Hilfe von drei Schaltern in jeder Schaltergruppe 16,
17 und 18 kann der zugehörige Gleichspannungsausgang 11,12,13
wahlweise nacheinander mit jeweils einem der drei Phasenleiter R,S,T
verbunden werden. Darüberhinaus kann der Gleichspannungs-
Ausgang 11 mit Hilfe des zusätzlich vorhandenen Schalters
160 auch noch mit dem Null-Leiter N des Mehrphasensystems
verbunden werden.

Ausdrücklich sei darauf hingewiesen, daß in jeder Schaltergruppe 16, 17, 18 zu einem gegebenen Zeitpunkt immer nur
ein Schalter geschlossen ist, während alle übrigen Schalter
der betreffenden Schaltergruppe geöffnet sind, so daß ein
Kurzschluß des Netzes 2 bzw. des Drehstromgenerators vermieden wird.

Die Steuerung der Schalter 160 bis 183 erfolgt mit Hilfe
einer Schaltersteuerung 20, was in Fig. 1 durch die Pfeile
F symbolisch angedeutet ist. Dabei kann jeder der Schalter
160 bis 183 einzeln, d.h. unabhängig von den übrigen Schaltern angesteuert werden. Abweichend von der vereinfachten
Darstellung der Fig. 1 ist also tatsächlich jeder der
Schalter 160 bis 183 durch eine eigene Ansteuerleitung
mit der Schaltersteuerung 20 verbunden.

Die Schaltersteuerung 20 erhält ihre Informationen darüber,
daß ein Zeitpunkt erreicht ist, in dem sie den Schaltzustand
eines oder mehrerer der Schalter 160 bis 183 zu ändern,
d.h. diesen oder diese Schalter aus dem geöffneten in
den geschlossenen oder aus dem geschlossenen in den geöffneten Zustand überzuführen hat, über eine Leitung 21
von einem Komparator 22, dem im vorliegenden Fall die
Ausgangssignale einer Meßfühleranordnung 25 zugeführt
werden, die ihrerseits die Amplituden-Momentanwerte der
auf
Spannungen mißt, die auch/den drei Phasen-Leitern R, S, T
gegenüber dem Null-Leiter N erscheinen. Da im vorliegenden
Fall eben diese Spannungswerte auch als Referenzspannungswerte dienen, die der Komparator 22 mit den Wechselspannungswerten vergleicht,
ist es nicht erforderlich, dem Komparator 22 von außen her
zusätzliche Referenzspannungswerte zuzuführen.

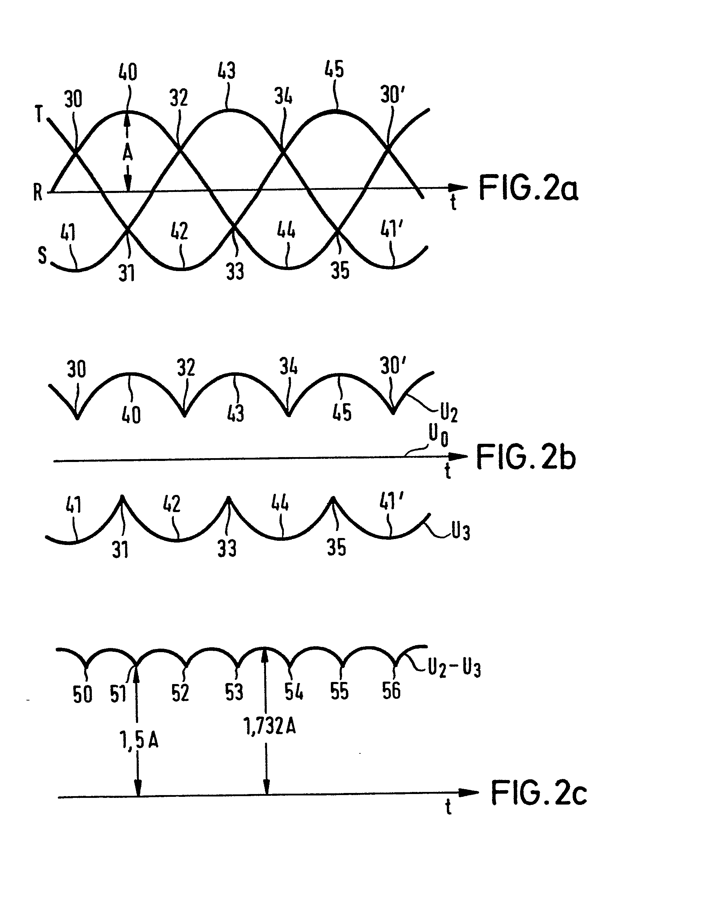

Die Arbeitsweise des in Fig. 1 dargestellten Gleichrichters
1 wird im folgenden unter Bezugnahme auf die Fig. 2a bis
2c und 3a bis 3c beschrieben.

In Fig. 2a sind über einer Zeitskala die Spannungsverläufe
auf den drei Phasen-Leitern R, S und T des in Fig. 1 dargestellten Mehrphasen-Systems wiedergegeben. Dabei ist
angenommen, daß die Spannung auf dem Phasenleiter R ganz
links das Nullpotential in positiver Richtung durchläuft
und auf diesen Nulldurchgang sind im folgenden sämtliche
Phasenwinkelangaben bezogen. Weiterhin wird angenommen,
daß zu dem Zeitpunkt, zu dem dieser Nulldurchgang erfolgt,
der Gleichspannungs-Ausgang 12 des Gleichrichters 1 aus
Fig. 1 dadurch mit dem T-Phasenleiter verbunden ist, daß
der Schalter 171 geschlossen ist, während die Schalter
172 und 173 geöffnet sind, und daß der Gleichspannungs-
Ausgang 13 mit dem Phasenleiter S dadurch verbunden ist,
daß der Schalter 182 geschlossen ist, während die Schalter
181 und 183 geöffnet sind.

Die am Gleichspannungs-Ausgang 12 bezüglich des Gleichspannungsausgangs 10 erscheinende pulsierende Gleichspannung hat
also gerade eines ihrer Maxima durchlaufen und bewegt sich
auf den 50%-Wert der positiven Scheitelspannung A zu, während die pulsierende Gleichspannung die zwischen dem Gleichspannungsausgang 13 und dem Gleichspannungsausgang 10
abfällt,auf ihr negatives

Maximum/zuläuft, das gleich dem negativen Scheitelwert
A ist. Dies ist in der Fig. 2b dargestellt, die in ihrer
oberen Hälften den zeitlichen Verlauf der zwischen den Gleichspannungs-
Ausgängen 10 und 12 erscheinenden pulsierenden Gleichspannung $U_2$ und
in ihrer unteren Hälfte die zwischen den Gleichspannungs-Ausgängen 10, 13
erscheinende pulsierende Gleichspannung $U_3$ wiedergibt,
die gegenüber dem in der Mitte dargestellten Null-Potential
$U_0$ positiv bzw. negativ sind.

Wenn die auf den Phasenleiter R erscheinende Wechselspannung den Phasenwinkel $30^\circ$ erreicht hat, durchläuft
sie mit positiver Steigung den 50%-Wert der Scheitelspannung A, den die auf dem Phasenleiter T erscheinende
Spannung gleichzeitig mit negativer Steigung durchläuft.
Somit ergibt sich in dem in Fig. 2a dargestellten
Spannungsdiagramm ein erster Schnittpunkt 30, der vom
Komparator 22 aufgrund der ihm vom Meßfühler 25 zugeführten Spannungs-Meßwerte erkannt und in ein entsprechendes Informationssignal umgesetzt wird, das über die
Leitung 21 an die Schaltersteuerung 20 gelangt, die daraufhin den Schalter 171 öffnet und gleichzeitig den Schalter
173 schließt, so daß der Gleichspannungsausgang 12 nunmehr
mit dem Phasenleiter R verbunden ist und die an ihm erscheinende pulsierende Gleichspannung $U_2$ dem nächsten,
in Fig. 2b dargestellten Maximum 40 zustrebt. Im Moment
des Umschaltzeitpunkts 30 hat die auf dem Phasenleiter S
erscheinende Spannung ihr negatives Maximum/erreicht,
das am Gleichspannungsausgang 13 erscheint und für die
dort abgreifbare Spannung $U_3$ in Fig. 2b/mit dem Bezugszeichen 41 gekennzeichnet ist.

Wenn die Gleichspannung $U_2$ bezogen auf $U_0$ am Gleichspannungs-Ausgang 12
bei einem Phasenwinkel von $90^\circ$ das positive Maximum 40
durchläuft, durchlaufen die Wechselspannungen auf den
Phasenleitern T und S im Schnittpunkt 31 den 50%-Wert
der negativen Scheitelspannung -A. In diesem Zeitpunkt wird aufgrund eines entsprechenden Komparatorsignals
durch die Schaltersteuerung 20 der Schalter 182 geöffnet
und gleichzeitig der Schalter 181 geschlossen, so daß
für einen nachfolgenden Zeitraum, während dessen die auf
dem Phasenleiter T erscheinende Spannung ihr negatives
Maximum 42 durchläuft, der Gleichspannungs-Ausgang 13
mit dem Phasenleiter T verbunden ist. Mit diesem negativen
Maximum 42 fällt zeitlich der Schnittpunkt 32 zusammen,
in welchem die Schaltersteuerung 20 den Schalter 173
öffnet und den Schalter 172 schließt, so daß der Gleichspannungs-Ausgang 12 für den nachfolgenden Zeitraum, in
dem die auf dem Phasenleiter S erscheinende Spannung ihr
positives Maximum 43 durchläuft, mit diesem Phasenleiter
S verbunden ist.

Mit dem positiven Maximum 43 fällt zeitlich der Schnittpunkt 33 zusammen, in dem die Spannungen auf den Phasenleitern R und T den 50%-Wert der negativen Scheitelspannung
-A durchlaufen und in welchem die Schaltersteuerung 20 den
Schalter 181 öffnet und gleichzeitig den Schalter 183
schließt, so daß der Gleichspannungs-Ausgang 13 vom
Phasenleiter T getrennt und statt dessen mit dem Phasen-
Leiter R verbunden wird, auf dem die Spannung im nachfolgenden Zeitraum das negative Maximum 44 durchläuft.
Mit diesem Maximum 44 fällt für den Gleichspannungs-Ausgang 12 der Umschaltzeitpunkt 34 zusammen, in welchem
der Gleichspannungs-Ausgang 12 vom bisherigen bzw. "alten"
Phasenleiter S getrennt und statt dessen mit dem "neuen"
Phasenleiter T verbunden wird, auf dem die Spannung anschließend das positive Maximum 45 durchläuft, das zeitlich mit dem Schnittpunkt 35 für die negative Gleichspannung
$U_3$ zusammenfällt, in welchem der Gleichspannungsausgang
13 vom Phasenleiter R getrennt und statt dessen mit dem
Phasenleiter S verbunden wird, auf dem die Spannung nachfolgend ein neues Maximum 41' durchläuft, das dem in
Fig. 2a ganz links dargestellten Maximum 41 entspricht.

In entsprechender Weise durchlaufen die Spannungen auf den Phasenleitern T und R den Schnittpunkt 30', so daß sich nunmehr der eben geschilderte Ablauf periodisch wiederholt.

In Fig. 2c ist der zeitliche Verlauf der zwischen den beiden Gleichspannungsausgängen 12 und 13 abgreifbaren Differenzspannung $U_2-U_3$ dargestellt. Man sieht, daß diese Spannung zwischen 1,5 A und 1,732 A mit der dreifachen Frequenz der Eingangswechselspannung schwankt und dabei eine wesentlich geringere Welligkeit als die pulsierenden Gleichspannungen $U_2$ und $U_3$ aufweist. Ihre Minimalwerte 50, 51, 52 usw. nimmt die Differenzspannung immer dann an, wenn $U_2$ bzw. $U_3$ einen der Maximalwerte 40, 41, 42 usw. bzw. die jeweils andere Spannung einen der Minimal- oder Schnittpunktswerte 30, 31 32 durchläuft.

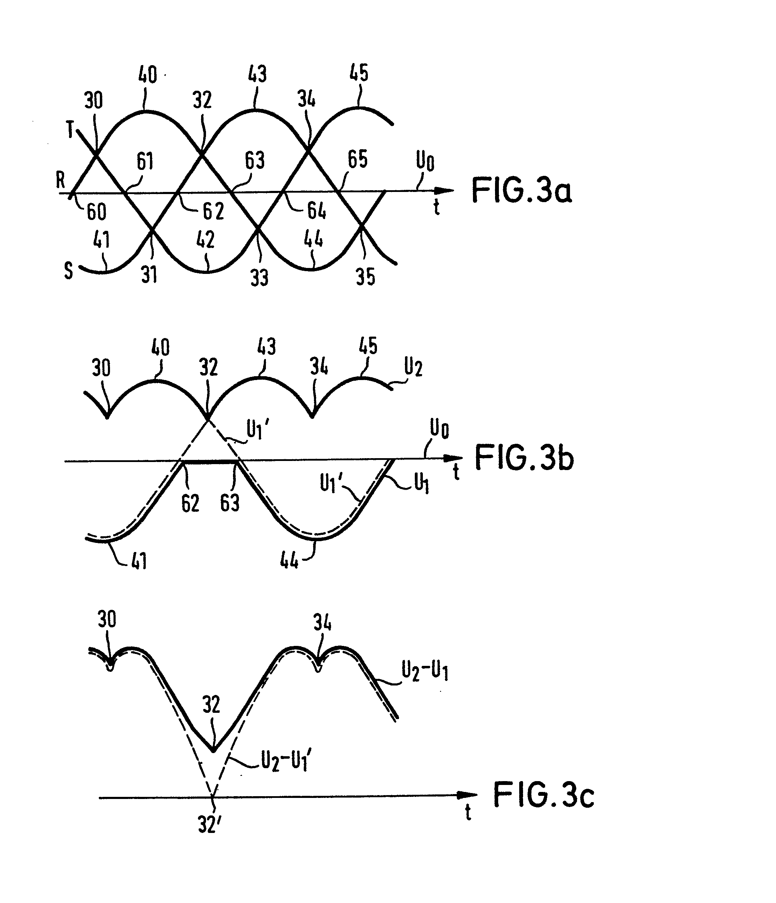

In Fig. 3a ist nochmals der Spannungsverlauf auf den drei Phasenleitern R, S, T des in Fig. 1 dargestellten Mehrphasensystems wiedergegeben, wobei zu den bereits im Zusammenhang mit Fig. 2a beschriebenen Schnittpunkten 30, 31, 32 usw. und Maximalwerten 40, 41, 42 usw. noch die Schnittpunkte 60 bis 65 hinzukommen, in welchen die Spannungen auf den verschiedenen Phasenleitern jeweils das Nullpotential durchlaufen. In Fig. 3b ist im oberen Bereich wieder die pulsierende Gleichspannung $U_2$ bezogen auf $U_0$ dargestellt, die bei dem oben beschriebenen Betrieb der Schaltergruppe 17 zwischen den Gleichspannungs-Ausgängen 10,12 abgreifbar ist. Im unteren Bereich der Fig. 3b ist in durchgezogenen Linien eine pulsierende negative Gleichspannung $U_1$ bzw. in gestrichelten Linien eine bezüglich der Spannung $U_2$ negative pulsierende Gleichspannung $U_1'$ jeweils bezogen auf $U_0$ dargestellt, die je nach Betriebsart der Schaltergruppe 16 zwischen den Gleichspannungs-Ausgängen 10 und 11 des in Fig. 1 dargestellten Gleichrichters abgreifbar sind.

Wie man den Fig. 3a bis 3c entnimmt, ist zur Erzeugung der Spannung $U_1$ der Gleichspannungs-Ausgang 11 zunächst über den geschlossenen Schalter 162 mit dem Phasenleiter S so lange verbunden, bis die auf diesem Phasenleiter erscheinende Spannung im Schnittpunkt 62 das Nullpotential durchläuft. In diesem Augenblick wird aufgrund eines entsprechenden Komparatorsignals durch die Schaltersteuerung 20 der Schalter 162 geöffnet und gleichzeitig statt dessen der Schalter 160 geschlossen, durch den der Gleichspannungs-Ausgang 11 mit dem Null-Leiter des 3-Phasen-Systems verbunden wird. Für den nachfolgenden Zeitraum, d.h. bis zum Schnittpunkt 63, in welchem die auf dem Phasenleiter R erscheinende Spannung das Nullpotential durchläuft, bleibt der Gleichspannungs-Ausgang 11 bei dieser Betriebsart mit dem Null-Leiter verbunden, um dann durch Öffnen des Schalters 160 von diesem getrennt und statt dessen durch Schließen des Schalters 163 mit dem Phasenleiter R verbunden zu werden, auf dem die Spannung im nachfolgenden Zeitraum eine negative Halbwelle mit dem negativen Scheitel 44 durchläuft.

Bei einer etwas anderen Betriebsart der Schaltergruppe 16 kann der Schalter 162, der zunächst den Gleichspannungs-Ausgang 11 mit dem Phasenleiter S verbindet, beim Durchlaufen des Schnittpunkts 62 geschlossen bleiben, wobei der Schalter 160 geöffnet bleibt. Statt dessen wird der Schalter 162 erst dann geöffnet, wenn die auf dem Phasenleiter S erscheinende Spannung den Schnittpunkt 32 erreicht hat. In diesem Schnittpunkt wird dann gleichzeitig der Schalter 163 geschlossen, so daß der Gleichspannungs-Ausgang 11 nunmehr mit dem Phasenleiter R verbunden ist und die an ihm erscheinende Spannung dem negativen Scheitelwert 44 zustrebt. Damit ergibt sich der in Fig. 3b gestrichelt eingezeichnete Spannungsverlauf $U_1'$.

In Fig. 3c sind die beiden Differenzspannungen $U_2-U_1$ und $U_2-U_1'$ dargestellt, die sich bei den beiden eben geschilderten Betriebsarten zwischen den Gleichspannungs-Ausgängen
12 und 11 abgreifen lassen. Man sieht, daß es sich in
beiden Fällen um mehr oder weniger stark pulsierende
Gleichspannungen handelt, die zwischen dem 0,5-fachen
und dem 1,732-fachen der Scheitelspannung bzw. zwischen
dem Nullpotential und dem 1,732-fachen der Scheitelspannung hin- und herpendeln und zu verschiedenen Gleichspannungs-Mittelwerten führen, die sich überdies von den
Gleichspannungs-Mittelwerten unterscheiden, die zwischen
den Gleichspannungs-Ausgängen 10 und 12 bzw. 10 und 13
bzw. 12 und 13 abgreifbar sind.

Bei den im Zusammenhang mit den Fig. 2a bis 2c und 3a bis
3c beschriebenen Arten der Erzeugung von Gleichspannungen
aus einem 3-phasigen Drehstromsystem mit Hilfe eines
erfindungsgemäßen Gleichrichters handelt es sich nur um
einige Möglichkeiten, da sich durch eine andere Wahl
und Kombination von Schnittpunkten noch eine Vielzahl von
weiteren Spannungsverläufen an und zwischen den Ausgängen
10, 11, 12 und 13 und eventuell weiteren Gleichspannungs-
ausgängen erzielen läßt.

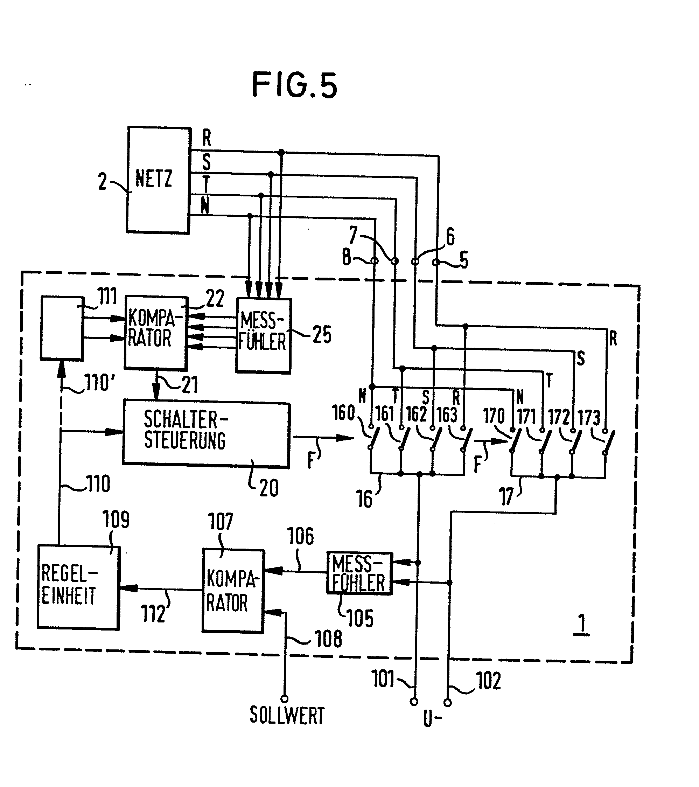

In Fig. 4 ist der zeitliche Spannungsverlauf auf den
sechs Phasenleitern eines entsprechenden Mehrphasensystems dargestellt, wobei hier die Phasenverschiebung
zwischen den einzelnen Phasenleitern jeweils 60$^\circ$ beträgt.
Wie bei einem 3-Phasensystem treten hier sowohl im
positiven wie im negativen Halbwellenbereich die 50%-Wert-
Schnittpunkte auf, von denen nur einige mit den Bezugszeichen 70 bis 75 bezeichnet sind.Erfindungsgemäß können
diese Schnittpunkte 70 bis 75 ebenso wie die Nullpotential-
Durchgänge als Umschalt-Zeitpunkte für einen erfindungsgemäßen Gleichrichter verwendet werden, um an einem oder
mehreren Gleichspannungs-Ausgängen eine Vielzahl von verschiedenen Gleichspannungs-Mittelwerten zu erzeugen. Zusätzlich zu den in Verbindung mit einem 3-Phasensystem
beschriebenen Schnittpunkten stehen hier aber auch noch die Schnittpunkte 80 bis 86 und 90 bis 96 zur Verfügung,
in denen jeweils die Spannungen auf zwei der sechs Phasenleiter gleichzeitig den 86,6%-Wert der positiven bzw.
negativen Scheitelspannung durchlaufen. Diese Schnittpunkte können in der bereits beschriebenen Weise dazu
verwendet werden, um einen oder zwei Gleichspannungs-
Ausgänge so von Phasenleiter zu Phasenleiter weiterzuschalten, daß er bzw. sie ständig mit demjenigen Phasenleiter verbunden ist bzw. verbunden sind, auf dem kurz
nach dem Umschalten die Spannung den positiven bzw.
negativen Scheitelwert durchläuft. Die beiden so gewonnenen
Gleichspannungen zeichnen sich durch eine geringe Welligkeit aus, die sich allerdings durch Bildung der
Differenzspannung nicht weiter verringern läßt, da hier
keine Verschiebung zwischen den Maximal- und Minimalwerten der Absolutbeträge auftritt. Allerdings ergibt
sich hier sowohl für die beiden Einzelspannungen als
auch für ihre Differenzspannung ein besonders großer
Mittelwert, da der Minimalwert der Differenzspannung
gleich dem 1,732-fachen der Scheitelspannung A und der
Maximalwert der Differenzspannung gleich dem 2-fachen
der Scheitelspannung A ist.

In Fig. 5 umfaßt ein erfindungsgemäßer Gleichrichter
1 zusätzlich zu den in Fig. 1 bereits dargestellten
Bestandteilen, die hier wieder die gleichen Bezugszeichen tragen, einen Gleichspannungs-Meßfühler 105,
der die zwischen den beiden Gleichspannungs-Ausgängen
101, 102 abgreifbare Gleichspannung ständig mißt und
den Meßwert über eine Leitung 106 einem Komparator 107
zuführt, der diesen Meßwerten mit einem vorgebbaren
Sollwert vergleicht, den er über eine zweite Eingangsleitung 108 erhält.

Die beiden Gleichspannungsausgänge 101 und 102 sind auch hier über Schaltergruppen 16 und 17 jeweils der Reihe nach mit einem der drei Phasenleiter R, S und T und mit dem Null-Leiter N des 3-Phasensystems verbindbar. Zu diesem Zweck ist die Schaltergruppe 17 gegenüber Fig. 1 um einen Schalter 170 erweitert, durch den eine Verbindung zwischen dem Ausgang 102 und dem Nullleiter N herstellbar ist.

Tritt eine Abweichung der überwachten Gleichspannung vom Sollwert auf, so gibt der Komparator 107 über eine Leitung 112 ein entsprechendes Signal an eine Regeleinheit 109, die entweder über eine Leitung 110 die Schaltersteuerung 20 veranlaßt, aus den vom Komparator 22 über die Leitung 21 gelieferten Signalen andere als die bisher verwendeten Signale auszuwählen und dadurch die Schaltzeitpunkte für die Schaltergruppen 16 und 17 so zu ändern, daß die Gleichspannung zwischen den Ausgängen 101 und 102 möglichst konstant bleibt. Alternativ oder ergänzend hierzu kann über die gestrichelt gezeichnete Leitung 110' von der Regeleinheit 109 ein Referenzwertgeber 111 dazu veranlaßt werden, dem Wechselspannungs-Komparator 22 andere Referenzwerte als bisher vorzugeben, so daß es hierdurch zu einer Veränderung der Schaltzeitpunkte für die Schaltergruppen 16 und 17 und somit zu einer Kompensation der aufgetretenen Gleichspannungsänderung kommt.

P a t e n t a n s p r ü c h e

1. Gleichrichter, dadurch  g e k e n n z e i c h n e t ,
   daß er folgende Bestandteile umfaßt:
   - eine Meßfühleranordnung (25) zur Erfassung der
     Amplituden-Momentanwerte der Wechselspannung,
   - einen Komparator (22) zum Vergleich der Momentanwerte mit wenigstens einem Referenzspannungswert,
   - steuerbare Schalter (160 bis 183), durch die die
     Gleichspannungsausgänge (11, 12, 13) des Gleichrichters (1) wahlweise mit den Wechselspannungseingängen (5, 6, 7) verbindbar sind, und
   - eine Schaltersteuerung (20), durch die in Abhängigkeit vom Ausgangssignal des Komparators (22) die Schaltzustände der Schalter (160 bis 183) änderbar
sind.

2. Gleichrichter nach Anspruch 1 zur Erzeugung von Gleichspannungen aus den Wechselspannungen eines Mehrphasensystems, dadurch g e k e n n z e i c h n e t , daß
wenigstens einer der Gleichspannungsausgänge (11, 12,
13) durch Schalter (160 bis 183) wahlweise nacheinander
mit jeweils einem von mehreren Phasenleitern (R,S,T)
verbindbar ist.

3. Gleichrichter nach Anspruch 2, dadurch g e k e n n -
z e i c h n e t , daß     wenigstens ein  Gleichspannungsausgang (11) durch Schalter (160)
wahlweise auch mit dem Null-Leiter (N) verbindbar
ist.

4. Gleichrichter nach Anspruch 2 oder 3, dadurch
g e k e n n z e i c h n e t , daß als Referenzspannungen die Spannungen auf den Leitern (R, S, T, N)
des Mehrphasensystems dienen und daß ein Schalter
(160 bis 183) der den wenigstens einen Gleichspannungsausgang (11, 12, 13) mit einem Leiter (R, S, T, N)
des Mehrphasensystems verbindet, dann geöffnet wird,
wenn der Amplituden-Momentanwert der Spannung auf
diesem Leiter (R, S, T, N) nach Vorzeichen und Betrag
gleich dem Amplituden-Momentanwert der Spannung auf
einem vorbestimmten anderen Leiter (R, S, T, N) des
Mehrphasensystems ist, und daß gleichzeitig mit dem
Öffnen des bisher geschlossenen Schalters (160 bis 183)
ein Schalter (160 bis 183) geschlossen wird, der den
Gleichspannungsausgang (11, 12, 13) mit dem vorbestimmten anderen Leiter (R, S, T, N) verbindet.

5. Gleichrichter nach Anspruch 4, dadurch g e k e n n -
z e i c h n e t , daß zwei Gleichspannungsausgänge
(12, 13) bei Spannungsgleichheit von Leiter (R, S, T) zu Leiter (R, S, T) des Mehrphasensystems weiterschaltbar sind, wobei der eine Gleichspannungsausgang
(12) immer mit den jeweils den positiven Spannungsbereich durchlaufenden Leitern (R, S, T) und der
andere Gleichspannungsausgang (13) immer mit den
jeweils den negativen Spannungsbereich durchlaufenden
Leitern (R, S, T) verbunden ist.

6. Gleichrichter nach einem der Ansprüche 2 bis 5,
   dadurch g e k e n n z e i c h n e t , daß das Mehrphasensystem dreiphasig ist und daß der wenigstens
   eine Gleichspannungsausgang (11, 12, 13) wahlweise
   nacheinander mit jeweils einem der drei Phasenleiter
   (R,S,T) verbindbar ist.

7. Gleichrichter nach Anspruch 6, dadurch g e k e n n -
   z e i c h n e t , daß der wenigstens eine Gleichspannungsausgang (11) außerdem wahlweise auch
   mit dem Null-Leiter (N) verbindbar ist.

8. Gleichrichter nach Anspruch 6 oder 7, dadurch g e -
   k e n n z e i c h n e t ,daß zwei Gleichspannungs-
   ausgänge (12, 13) von Phasenleiter (R, S, T) zu
   Phasenleiter (R, S, T) weiterschaltbar sind, daß das
   Umschalten des positiven Gleichspannungsausgangs (12)
   von einem Phasenleiter (R, S, T) auf einen anderen
   Phasenleiter (R, S, T) immer dann erfolgt, wenn der
   Amplituden-Momentanwert der Spannung auf diesen
   beiden Phasenleitern den positiven 50%-Wert der
   Maximal-Amplitude der Wechselspannung durchläuft,
   und daß das Umschalten des negativen Gleichspannungsausgangs (13) von einem Phasenleiter (R, S, T) auf
   einen anderen Phasenleiter (R, S, T) immer dann erfolgt, wenn der Amplituden-Momentanwert der Spannung
   auf diesen beiden Phasenleitern den negativen 50%-
   Wert der Maximal-Amplitude durchläuft.

9. Gleichrichter nach einem der vorhergehenden Ansprüche, dadurch g e k e n n z e i c h n e t , daß wenigstens zwei Gleichspannungs-Ausgänge (11, 12, 13) vorhanden sind, zwischen denen mehrere voneinander verschiedene Gleichspannungen nacheinander abgreifbar sind.

10. Gleichrichter nach einem der vorhergehenden Ansprüche, dadurch g e k e n n z e i c h n e t , daß mehr als zwei Gleichspannungs-Ausgänge (11, 12, 13) vorhanden sind, zwischen denen mehrere voneinander verschiedene Gleichspannungen gleichzeitig abgreifbar sind.

11. Gleichrichter nach einem der vorhergehenden Ansprüche, dadurch g e k e n n z e i c h n e t , daß er einen Meßfühler (105) zur Erfassung der zwischen wenigstens zwei seiner Gleichspannungsausgänge (101,102) abgreifbaren Gleichspannung, einen Komparator (107) zum Vergleich des Meßwertes für die Gleichspannung mit einem Sollwert sowie eine Regeleinheit (109) umfaßt, durch die die Schaltkriterien für die Schaltersteuerung (20) so änderbar sind, daß die Gleichspannung vom Sollwert möglichst wenig abweicht.

12. Gleichrichter nach Anspruch 11, dadurch g e - k e n n z e i c h n e t , daß die Schaltkriterien dadurch änderbar sind, daß dem Wechselspannungs-Komparator (22) geänderte Referenzwerte zuführbar sind.

13. Gleichrichter nach Anspruch 11 oder 12, dadurch g e k e n n z e i c h n e t , daß die Schaltkriterien dadurch änderbar sind, daß das Umschalten bestimmter Schalter (160 bis 173) beim Über- oder Unterschreiten anderer, dem Wechselspannungs-Komparator (22) ständig zugeführter Referenzwerte erfolgt.

## FIG.1

## FIG.4

FIG.2a

FIG.2b

FIG.2c

0169404

FIG.3a

FIG.3b

FIG.3c

0169404

# FIG.5